# FASCICULE DE BREVET EUROPEEN

(11) **EP 2 198 074 B1**
(45) Date de publication et mention de la délivrance du brevet: **25.05.2016**
(21) Numéro de dépôt: 08804575.2
(22) Date de dépôt: 23.09.2008
(51) Int. Cl.: H01M 8/04, H01M 8/24, C25B 1/08, C25B 9/20, C25B 15/02, C25B 9/04, H01M 8/02

(54) **ELECTROLYSEUR HAUTE TEMPÉRATURE A DISPOSITIF D'HOMOGÉNÉISATION DE LA TEMPÉRATURE**
HOCHTEMPERATURELEKTROLYSER MIT TEMPERATURHOMOGENISIERUNGSVORRICHTUNG
HIGH TEMPERATURE ELECTROLYSER WITH TEMPERATURE HOMOGENISATION DEVICE

(30) Priorité: 25.09.2007 FR 0757822
(43) Date de publication de la demande: 23.06.2010
(73) Titulaire: Commissariat à l'Énergie Atomique et aux Énergies Alternatives, 75015 Paris (FR)
(72) Inventeur: LE GALLO, Patrick, F-38160 Saint Appolinard (FR); BAURENS, Pierre, F-38940 Roybon (FR)
(74) Mandataire: Ilgart, Jean-Christophe
(86) Numéro de dépôt international: PCT/EP2008/062650
(87) Numéro de publication internationale: WO 2009/040335

(56) Documents cités:
- WO-A-2006/053727
- DE-A1- 10 015 360
- US-A1- 2004 229 099

## Description

### DOMAINE TECHNIQUE ET ART ANTÉRIEUR

La présente invention se rapporte à des réacteurs électrochimiques munis d'un dispositif d'homogénéisation de la température, notamment des électrolyseurs ou des piles à combustibles, et plus particulièrement des électrolyseurs haute température.

Un électrolyseur comporte une pluralité de cellules élémentaires formées par une cathode et une anode séparées par un électrolyte, les cellules élémentaires étant raccordées électriquement en série au moyen de plaques interconnectrices interposées, en général, entre une anode d'une cellule élémentaire et une cathode de la cellule élémentaire suivante. Une connexion anode-anode suivie par une connexion cathode-cathode est également possible. Les plaques interconnectrices sont des composants conducteurs électroniques formés par une plaque métallique. Ces plaques assurent par ailleurs la séparation entre le fluide cathodique circulant au niveau d'une cellule élémentaire du fluide anodique circulant dans une cellule élémentaire suivante.

L'anode et la cathode sont en matériau poreux dans lequel les gaz peuvent s'écouler.

Par exemple, dans le cas de l'électrolyse de l'eau pour produire de l'hydrogène, de la vapeur d'eau circule au niveau de la cathode où est généré l'hydrogène sous forme gazeuse, et un gaz drainant circule au niveau de l'anode et collecte l'oxygène généré sous forme gazeuse à l'anode.

De manière générale, on cherche à réduire la résistance électrique de l'électrolyseur afin d'en améliorer le fonctionnement, notamment pour limiter son échauffement et les pertes électriques par effet Joule.

Or les électrolyseurs actuels ont une résistance électrique non négligeable, de telle sorte que la réaction globale au niveau de l'électrolyseur est exothermique, alors que la réaction électrochimique au niveau de chaque cellule est endothermique.

Il est donc nécessaire d'évacuer cette chaleur afin d'assurer un fonctionnement stationnaire de l'électrolyseur. L'évacuation de la chaleur se fait alors principalement par les gaz sortant de l'électrolyseur. Cette chaleur est actuellement utilisée pour réchauffer les gaz entrant par échange thermique dans un échangeur externe disposé en amont de l'électrolyseur.

Or les éléments internes à l'électrolyseur, notamment les cellules élémentaires, sont réalisés au moins en partie en céramique, ceux-ci sont donc très sensibles aux gradients de température et ne sont pas aptes à supporter un choc thermique supérieur à 50°C. Cela implique donc que la température des gaz entrants ne soit pas inférieure à celle des gaz sortants de plus de 50°C.

Par ailleurs pour assurer la longévité de l'électrolyseur et son bon fonctionnement, il est préférable d'assurer une répartition de la température au sein de l'électrolyseur la plus homogène possible. On recherche alors des températures ne variant pas plus de 10°C dans tout l'électrolyseur.

Pour éviter ces chocs thermiques comme indiqué précédemment, on utilise un échangeur thermique en amont de l'électrolyseur comme cela est décrit dans le document « Concepts and Design for scaling up high température water vapour electrolysis », W Doenits and R. Schmidberger, in Int. J. Hydrogen Energy, Vol.7, N°4, pp. 321-330. 1982.

Or, du fait des déperditions thermiques inévitables entre la sortie de l'électrolyseur et l'entrée de l'échangeur et le pincement de l'échangeur, il y a une différence d'au moins 50°C entre la température des gaz entrants et celle des gaz sortants. Ceci impose donc d'avoir une température de gaz sortant supérieure à celle requise pour les gaz entrants.

Or cette différence de température entre les gaz entrants et sortants est défavorable à la recherche d'une température homogène dans l'électrolyseur.

En outre, cette température plus élevée nuit à la tenue mécanique des cellules et baisse le rendement de conversion.

Ceci implique donc un choix de matériaux spécifiques ; au-delà d'une température de 700°C, les matériaux adaptés sont peu nombreux et leur coût de revient est élevé. En outre, ils sont plus difficiles à travailler et à assembler. Par exemple, un superalliage spécialement adapté aux hautes températures comme le Haynes 230 a un prix dix fois supérieur à celui d'un acier inoxydable utilisable jusqu'à 500°C.

Par ailleurs, des calories étant récupérées sur les gaz issus de l'anode et de la cathode, deux échangeurs avec étage à haute température sont requis.

La demande de brevet internationale WO2006/053727 propose un réacteur électrochimique avec un échangeur de chaleur intégré à une plaque interconnectrice du réacteur. Des ouvertures permettent le passage du fluide de refroidissement vers les canaux en contact avec une électrode.

La présence de connexions à haute température entre l'électrolyseur et les échangeurs accroît également le coût et les difficultés d'intervention et de maintenance sur les échangeurs. Enfin l'installation globale est de volume et de poids accrus.

C'est par conséquent un but de la présente invention d'offrir un réacteur électrochimique ayant un fonctionnement amélioré et une durée de vie augmentée.

C'est également un but de la présente invention d'offrir un réacteur électrochimique à coût de revient réduit et une installation intégrant le réacteur électrochimique d'encombrement réduit.

### EXPOSÉ DE L'INVENTION

Les buts énoncés ci-dessus sont atteints par un réacteur électrochimique comportant une pluralité de cellules élémentaires empilées, reliées par des plaques interconnectrices intégrant des canaux pour faire circuler les gaz entrants dans le réacteur électrochimique préalablement à leur injection dans les cathodes et/ou les anodes.

En d'autres termes, le réacteur électrochimique intègre des échangeurs de chaleur internes formés directement entre les cellules élémentaires.

Dans le cas de l'électrolyse de l'eau, la vapeur d'eau en entrée circule dans les plaques interconnectrices avant de circuler dans les cathodes ; lors de cette circulation elle est échauffée par échange de chaleur avec le gaz circulant dans les cathodes et avec les anodes en contact avec les plaques interconnectrices.

Les échangeurs externes peuvent être simplifiés et rendus plus compacts.

Il n'est également plus nécessaire d'avoir des gaz sortants à une température supérieure à celle requise pour les gaz entrants. L'homogénéité de température au sein du réacteur électrochimique est donc plus aisée à atteindre, le fonctionnement du réacteur électrochimique est donc amélioré.

Dans le cas des électrolyseurs exothermiques, le circuit fluidique réalisé directement dans les cellules élémentaires permet donc :
- de diminuer la température de la plaque interconnectrice par circulation des gaz d'entrée dans celle-ci pour une température donnée de fonctionnement de la cellule électrochimique, le gain en température peut atteindre plus de 50°C,
- de baisser la température d'entrée des gaz, jusqu'à des températures inférieures à 600°C,
- de limiter au niveau du système de production d'hydrogène la zone dite « chaude », c'est-à-dire supérieure à 600°C à l'intérieur de l'électrolyseur,
- de réduire le coût des échangeurs externes, leur prix peut être divisé par cinq, voire dix,
- d'améliorer l'homogénéité de température au sein de l'électrolyseur, la différence de température entre deux points d'une cellule électrochimique élémentaire peut être abaissée en dessous de 10°C.

Par conséquent, ce circuit intégré dans les cellules permet de chauffer efficacement et directement le (ou les) gaz d'entrée à partir des pertes internes de l'électrolyseur et d'homogénéiser leur température.

Dans le cas des électrolyseurs endothermiques à fonctionnement allothermique, le circuit fluidique réalisé directement dans les plaques interconnectrices permet de chauffer l'électrolyseur par les gaz entrants et d'éviter la mise en place d'un caloporteur et d'un circuit spécifique pour chauffer le gaz à l'intérieur de l'électrolyseur.

La présente invention a alors principalement pour objet un réacteur électrochimique comportant un empilement d'une pluralité de cellules d'électrolyse élémentaires, chaque cellule étant formée d'une cathode, d'une anode et d'un électrolyte disposé entre la cathode et l'anode, une plaque interconnectrice étant interposée entre deux cellules élémentaires, ladite plaque interconnectrice étant en contact électrique avec une électrode d'une cellule élémentaire et une électrode d'une cellule élémentaire suivante, ledit réacteur électrochimique comportant également des moyens aptes à assurer la circulation d'au moins un fluide pneumatique destiné à venir en contact avec les cathodes et/ou les anodes dans le réacteur électrochimique pour l'échauffer avant sa mise en contact avec les cathodes et/ou les anodes.

Lesdits moyens de circulation, comportent par exemple au moins un conduit pour la circulation du fluide pneumatique de telle sorte que des échanges thermiques entre le fluide pneumatique et les cathodes et/ou les anodes aient lieu.

Le conduit peut être formé dans la plaque interconnectrice, une première extrémité dudit conduit étant connectée à une alimentation en fluide pneumatique et une deuxième extrémité amenant le fluide pneumatique chauffé en contact avec l'une ou l'autre des électrodes en contact avec la plaque interconnectrice.

Dans une variante, le conduit est interposé entre la plaque interconnectrice et l'une et/ou l'autre des électrodes.

Dans un autre exemple de réalisation, les moyens de circulation comportent un premier conduit pour la circulation d'un fluide pneumatique destiné à venir en contact avec l'une des deux électrodes, et un deuxième conduit pour la circulation d'un fluide pneumatique destiné à venir en contact avec l'autre électrode.

Les premier et deuxième conduits peuvent être réalisés dans la plaque interconnectrice, ou le premier conduit peut être interposé entre la plaque interconnectrice et l'une des électrodes et le deuxième conduit peut être interposé entre la plaque interconnectrice et l'autre électrode.

Dans le cas où, l'une au moins des deux électrodes est une cathode, le fluide pneumatique destiné à venir en contact avec la cathode est de la vapeur d'eau, le réacteur effectuant alors l'électrolyse de l'eau pour générer de l'hydrogène.

Le réacteur est, par exemple destiné à fonctionner à haute température, avantageusement supérieure à 900°C.

La présente invention a également pour objet une installation d'électrolyse comportant un électrolyseur selon la présente invention et un échangeur thermique en amont du réacteur électrochimique dans lequel circulent de manière séparée les fluides pneumatiques entrants et les fluides pneumatiques sortants, de manière à échauffer les fluides pneumatiques entrants à partir des fluides pneumatiques sortants.

La présente invention a également pour objet un procédé d'électrolyse d'un fluide pneumatique mettant en oeuvre un réacteur électrochimique selon la présente invention, comportant les étapes :
a) de circulation du fluide pneumatique entre une électrode d'une cellule élémentaire et une électrode d'une cellule élémentaire adjacente sans contact avec celles-ci pour échauffer ledit fluide pneumatique,
b) d'injection du fluide pneumatique échauffé sur l'une et/ou l'autre des électrodes.

On peut prévoir, lors de l'étape a), la circulation selon des écoulements distincts d'un fluide pneumatique destiné à venir en contact avec l'une des électrodes et un fluide pneumatique destiné à venir en contact avec l'autre électrode et, lors de l'étape b), l'injection de ces fluides pneumatiques sur l'une et l'autre des électrodes respectivement.

### BRÈVE DESCRIPTION DES DESSINS

La présente invention sera mieux comprise à l'aide de la description qui va suivre et des dessins annexés sur lesquels :
- la figure 1 est une vue de côté d'un exemple de réalisation d'un réacteur électrochimique selon la présente invention,
- la figure 2 est une vue en coupe du réacteur électrochimique, la figure 1 selon un plan A-A,
- la figure 3 est une vue de côté d'un autre exemple de réalisation d'un réacteur électrochimique selon la présente invention,
- la figure 4 est une vue en coupe du réacteur électrochimique de la figure 3 selon un plan B-B,
- la figure 5 est une représentation schématique en perspective d'un exemple d'échangeur de chaleur qui peut être mis en oeuvre dans les réacteurs électrochimiques selon la présente invention.

### EXPOSÉ DÉTAILLÉ DE MODES DE RÉALISATION PARTICULIERS

Dans la description qui va suivre, un électrolyseur de l'eau pour produire de l'hydrogène va être décrit à titre d'exemple. Cependant l'invention s'applique à tout autre réacteur électrochimique comme une pile à combustible.

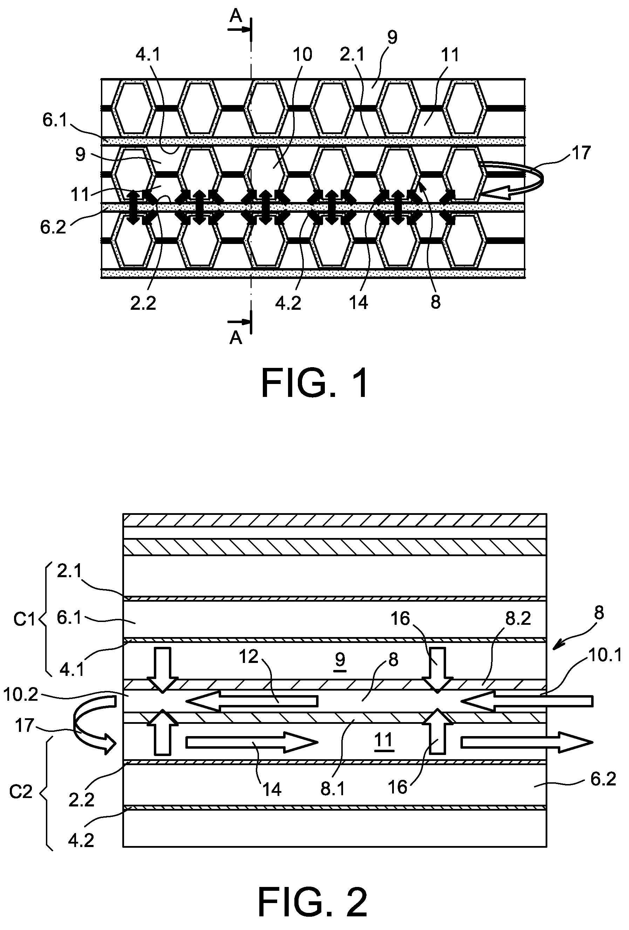

Sur la figure 1, on peut voir un exemple de réalisation d'un électrolyseur selon la présente invention comportant une pluralité de cellules élémentaires C1, C2... empilée.

Chaque cellule élémentaire comporte un électrolyte disposé entre une cathode et une anode.

Dans la suite de la description, nous décrirons en détail les cellules C1 et C2 et leur interface.

La cellule C1 comporte une cathode 2.1 et une anode 4.1 entre lesquelles est disposé un électrolyte 6.1, par exemple solide généralement d'épaisseur 100 µm.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux et ont par exemple une épaisseur de 40 µm.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs, elle permet l'alimentation électrique de l'anode 4.1 et de la cathode 2.2.

Une plaque interconnectrice 8 est interposée entre deux cellules élémentaires. Dans l'exemple représenté, elle est interposée entre une anode d'une cellule élémentaire et la cathode de la cellule adjacente. Mais on pourrait prévoir qu'elle soit interposée entre deux anodes ou deux cathodes.

La plaque interconnectrice 8 définit avec l'anode et la cathode adjacentes des canaux pour la circulation de fluides. Ils définissent des compartiments anodiques 9 dédiés à la circulation des gaz au niveau de l'anode et des compartiments cathodiques 11 dédiés à la circulation des gaz au niveau de la cathode, ceux-ci étant particulièrement visibles sur la figure 2.

Selon la présente invention, la plaque interconnectrice 8 comporte, en outre au moins un conduit 10 connecté par une première extrémité 10.1 à une alimentation en fluide pneumatique destiné à subir une réduction. Dans l'exemple considéré, il s'agit de la vapeur d'eau et à une deuxième extrémité 10.2 du compartiment cathodique.

Ce conduit a avantageusement la forme d'un serpentin pour augmenter la surface d'échange thermique.

Dans l'exemple représenté, la plaque interconnectrice comporte une pluralité de conduits 10 et une pluralité de compartiments anodiques et cathodiques. De manière avantageuse, le conduit 10 et les compartiments ont des sections hexagonales, en nid d'abeille, ce qui permet d'augmenter la densité de compartiments 9, 11 et des conduits 10.

Les flèches 12 représentent la vapeur d'eau « froide » entrant dans l'électrolyseur et les flèches 14 représentent la vapeur d'eau échauffée circulant dans le compartiment cathodique 11.

Les flèches 16 représentent les transferts de calories de la cathode 2.2 et l'anode 4.1 vers la plaque interconnectrice, ou plus précisément vers la vapeur d'eau « froide ».

Les flèches 17 symbolisent l'écoulement de la vapeur d'eau échauffée du conduit 10 vers le compartiment cathodique 11.

Nous allons maintenant expliquer le fonctionnement de la présente invention.

La vapeur d'eau, éventuellement préalablement chauffée, pénètre dans le conduit 10 ; lors de son déplacement dans le conduit 10, elle est chauffée par échange thermique avec la cathode et l'anode bordant la plaque interconnectrice 8.

Cette vapeur chauffée à une température proche de celle de la cellule C1 pénètre ensuite dans le compartiment cathodique 1, dans lequel elle subit une réduction en entrant en contact avec la cathode 2.2 ; de l'hydrogène est alors généré selon la réaction :

2 H₂O→ 2H₂+O₂.

Un échangeur thermique est avantageusement prévu en amont de l'électrolyseur pour échauffer le ou les fluides entrants à partir des fluides sortants, cependant celui-ci peut avantageusement être plus simple et moins encombrant que ceux utilisés dans l'état de la technique, en effet il n'a pas besoin de disposer d'un étage haute température.

On pourrait prévoir que le conduit 10 soit connecté en entrée sur une source de gaz drainant destiné à circuler dans le compartiment anodique 9, et en sortie sur le compartiment anodique 9.

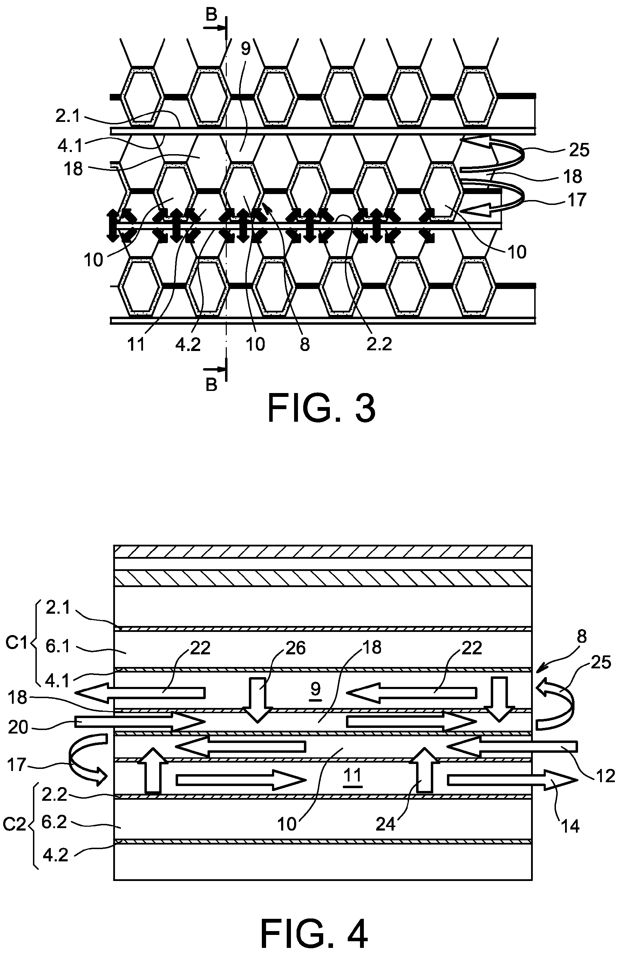

Sur les figures 3 et 4, on peut voir un autre exemple de réalisation d'un électrolyseur selon l'invention dans lequel un conduit supplémentaire 18 est prévu le long du conduit 10 et destiné à recevoir un gaz drainant circulant dans le compartiment anodique 9.

Les flèches 20 représentent le gaz drainant « froid» entrant dans l'électrolyseur et les flèches 22 représentent le gaz drainant échauffé circulant dans le compartiment anodique 9.

Les flèches 24 représentent les transferts de calories de la cathode 2.2 vers la plaque interconnectrice, ou plus précisément la vapeur d'eau « froide », et les flèches 26 représentent les transferts de calories de l'anode 4.1 vers la plaque interconnectrice, plus précisément vers le gaz drainant.

La flèche 25 symbolise l'écoulement du gaz drainant du conduit 18 vers le compartiment anodique 9. Cet écoulement n'est en aucun cas nécessaire, ce gaz pourrait être utilisé dans d'autres zones ou même à l'extérieur du réacteur.

Nous allons maintenant expliquer le fonctionnement de cet autre exemple d'électrolyseur selon la présente invention.

La vapeur d'eau, éventuellement préalablement chauffée, pénètre dans le conduit 10 ; lors de son déplacement dans le conduit 10, elle est chauffée par échange thermique avec la cathode bordant la plaque interconnectrice 8.

Cette vapeur chauffée à une température proche de celle de la cellule C1 pénètre ensuite dans le compartiment cathodique 11, dans lequel elle subit une réduction ; de l'hydrogène est alors généré.

Le gaz drainant éventuellement préalablement chauffé pénètre dans le conduit 18, lors de son déplacement dans le conduit 18, il est chauffé par échange thermique avec l'anode bordant la plaque interconnectrice 8.

Ce gaz chauffé à une température proche de celle de la cellule C1 pénètre ensuite dans le compartiment anodique 9, et emporte l'oxygène généré à l'anode.

Dans les exemples des figures 1 à 4, les plaques interconnectrices sont massives et les canaux sont réalisés directement dans celles-ci.

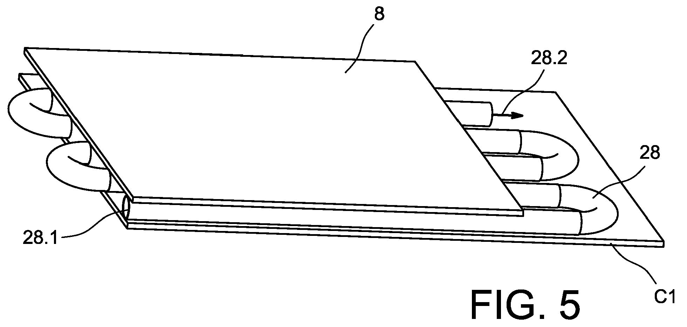

Cependant, comme on peut le voir sur la figure 5 représentant un autre exemple de réalisation d'un échangeur thermique intégré selon l'invention, l'échangeur est disposé sur la plaque interconnectrice. Sont représentés une cellule électrochimique C1, un serpentin 28 formé d'un tube creux, celui-ci étant en contact avec une électrode de la cellule, et la plaque interconnectrice 8.

Le fluide pneumatique pénètre dans le serpentin 28 par une extrémité 28.1, circule dans le serpentin 28 avant de s'écouler hors de celui-ci par une extrémité 28.2 et de se répandre sur l'électrode.

Si cette électrode est la cathode 2.1, le fluide est la vapeur d'eau.

Le serpentin est avantageusement réalisé en matériau conducteur électrique afin de participer à la connexion électrique entre la cathode de la cellule C1 et la plaque interconnectrice. Il est rappelé que la plaque interconnectrice sert également à séparer le fluide cathodique d'une cellule élémentaire d'un fluide anodique d'une cellule élémentaire adjacente.

De manière symétrique sur l'autre face de la plaque interconnectrice, un serpentin (non représenté) est interposé entre l'anode et la plaque interconnectrice.

La présente invention consiste donc à prévoir des moyens aptes à assurer un échauffement d'une partie au moins des gaz entrants dans l'électrolyseur avant d'être mis en contact avec la cathode ou l'anode.

Les dimensions des circuits échangeurs de chaleur sont du même ordre de grandeur que celles des circuits cathodique et/ou anodique, puisque ce sont les mêmes fluides et les mêmes débits qui circulent dans ces différents circuits.

Le fonctionnement d'un réacteur électrochimique est basé sur le déploiement de surface afin de maximiser les surfaces des électrodes pour augmenter le rendement de réaction. Un échangeur thermique nécessite également une grande surface d'échange pour être efficace. Par conséquent, l'accroissement des surfaces de réaction permet d'accroître les surfaces d'échanges thermiques.

Grâce à l'invention, une partie de l'échangeur thermique est intégrée directement dans l'électrolyseur, en particulier la partie la plus chaude de celui-ci. La zone voyant des fluides à haute température est alors limitée à l'électrolyseur, la quantité de matière pour réaliser les parties destinées à venir en contact avec les fluides à haute température est donc réduite. Le coût de la matière peut ainsi être divisé par cinq, voire dix par rapport aux installations de l'état de la technique.

Les écarts de température dans l'électrolyseur sont également réduits. Par ailleurs, la distance de transport de la chaleur de la source chaude (la cellule du réacteur) à l'échangeur étant diminuée, des écarts de température inférieurs à 50°C peuvent être obtenus.

Pour les réacteurs exothermiques, la plaque interconnectrice est à une température plus basse que celle de la cellule, d'au moins 50°C.

La corrosion est donc réduite, et par conséquent l'oxydation de celle-ci. La résistance électrique des plaques interconnectrices augmente donc moins vite, ce qui diminue les pertes par effet Joule dans le temps.

La plaque interconnectrices est par exemple fabriquée à base de fer ou de nickel, et contient des éléments comme le chrome. Ce chrome a tendance à passer dans les gaz et pollue les électrodes. Or, grâce à la présente invention, du fait de l'abaissement de la température, il y a une diminution de la volatilisation des éléments d'alliage et donc une baisse des émissions de polluants venant polluer les électrodes de la cellule ; il est à noter que ces émissions augmentent de manière exponentielle avec la température d'après la loi d'Arhénius.

Grâce à la présente invention, la durée de vie de l'empilement des cellules est généralement augmentée du fait de la baisse de température de fonctionnement. P. Batfalsky dans Journal of Power Sources 155, 2006, pp. 128-13) montre en effet que la durée de vie d'un électrolyseur de l'état de la technique peut être multipliée par dix, voire vingt en abaissant la température de 800°C à 700°C.

Par ailleurs, la différence entre les températures minimales et maximales de la cellule peut être réduite à des valeurs inférieures à la dizaine de degrés, le fonctionnement de l'électrolyseur est donc amélioré.

La température d'entrée et de sortie des gaz pourra être plus basse, ce qui peut permettre de connecter l'électrolyseur à des circuits à plus basse température inférieure à 600°C, seul l'électrolyseur étant en son sein à haute température, ce qui permet d'utiliser des vannes et instrumentations courantes et moins coûteuses.

L'échangeur selon l'invention et les circuits de jonction à l'électrolyseur peuvent en outre être de conception plus simple et moins coûteuse. Les pertes thermiques sont également plus faibles. Cet échangeur fonctionne dans une gamme de température moins contraignante au niveau du matériau et de l'efficacité globale de l'échange de chaleur.

Pour les réacteurs endothermiques : l'invention permet le chauffage de l'électrolyseur à l'intérieur même de celui-ci du fait de la présence de l'échangeur de chaleur à l'intérieur de l'électrolyseur. L'élévation de température des gaz en entrée est limitée et l'électrolyseur offre une meilleure efficacité.

## Revendications

1. Réacteur électrochimique comportant un empilement d'une pluralité de cellules d'électrolyse élémentaires (C1, C2), chaque cellule (C1, C2) étant formée d'une cathode (2.1, 2.2), d'une anode (4.1, 4.2) et d'un électrolyte (6.1, 6.2) disposé entre la cathode (2.1, 2.2) et l'anode (4.1, 4.2), une plaque interconnectrice (8) étant interposée entre deux cellules élémentaires (C1, C2), ladite plaque interconnectrice (8) étant en contact électrique avec une électrode d'une cellule élémentaire et une électrode d'une cellule élémentaire suivante, ledit réacteur électrochimique comportant également des moyens (10, 18, 28) aptes à assurer la circulation d'au moins un fluide pneumatique destiné à venir en contact avec les cathodes et/ou les anodes dans le réacteur électrochimique pour l'échauffer avant sa mise en contact avec les cathodes et/ou les anodes, dans lequel lesdits moyens de circulation comportent au moins un conduit (10, 18, 28) pour la circulation du fluide pneumatique, de telle sorte que des échanges thermiques entre le fluide pneumatique et les cathodes et/ou les anodes aient lieu, le conduit permettant le chauffage du fluide s' étendant d'un côté à un autre côté de la plaque interconnectrice entre les cellules élémentaires, et comportant une première extrémité située d'un côté de la plaque interconnectrice, ladite première extrémité étant connectée à une alimentation délivrant ledit fluide pneumatique et une deuxième extrémité située d'un autre côté de la plaque interconnectrice, ladite deuxième extrémité amenant le fluide chauffé en contact avec l'une ou l'autre des électrodes en contact avec la plaque interconnectrice.

2. Réacteur électrochimique selon la revendication 1, dans lequel le conduit (10, 18) est formé dans la plaque interconnectrice (8).

3. Réacteur électrochimique selon la revendication 1, dans lequel le conduit (28) est interposé entre la plaque interconnectrice et l'une et/ou l'autre des électrodes.

4. Réacteur électrochimique selon la revendication 1, dans lequel les moyens de circulation comporte un premier conduit (10) pour la circulation d'un fluide pneumatique destiné à venir en contact avec l'une des deux électrodes, et un deuxième conduit (18) pour la circulation d'un fluide pneumatique destiné à venir en contact avec l'autre électrode.

5. Réacteur électrochimique selon la revendication 4, dans lequel les premier (10) et deuxième (18) conduits sont réalisés dans la plaque interconnectrice.

6. Réacteur électrochimique selon la revendication 4, dans lequel le premier conduit est interposé entre la plaque interconnectrice et l'une des électrodes et le deuxième conduit est interposé entre la plaque interconnectrice et l'autre électrode.

7. Réacteur électrochimique selon l'une des revendications 1 à 6, dans lequel, lorsque l'une au moins des deux électrodes est une cathode, le fluide pneumatique destiné à venir en contact avec la cathode est de la vapeur d'eau.

8. Réacteur électrochimique selon l'une des revendications précédentes destiné à fonctionner à haute température, avantageusement supérieure à 900°C.

9. Installation d'électrolyse comportant un électrolyseur selon l'une des revendications précédentes et un échangeur thermique en amont du réacteur électrochimique, dans lequel circulent de manière séparée les fluides pneumatiques entrants et les fluides pneumatiques sortants, de manière à échauffer les fluides pneumatiques entrants à partir des fluides pneumatiques sortants.

10. Procédé d'électrolyse d'un fluide pneumatique mettant en oeuvre un réacteur électrochimique selon l'une des revendications précédentes, comportant les étapes :
a) de circulation du fluide pneumatique entre une électrode d'une cellule élémentaire et une électrode d'une cellule élémentaire adjacente sans contact avec celles-ci pour échauffer ledit fluide pneumatique,
b) d'injection du fluide pneumatique échauffé sur l'une et/ou l'autre des électrodes.

11. Procédé d'électrolyse selon la revendication 10, dans lequel l'étape a) prévoit la circulation selon des écoulements distincts d'un fluide pneumatique destiné à venir en contact avec l'une des électrodes et un fluide pneumatique destiné à venir en contact avec l'autre électrode et l'étape b) prévoit l'injection de ces fluides pneumatiques sur l'une et l'autre des électrodes respectivement.

## Patentansprüche

1. Elektrochemischer Reaktor, umfassend einen Stapel aus einer Mehrzahl von Elementarelektrolysezellen (C1, C2), wobei jede Zelle (C1, C2) mit einer Kathode (2.1, 2.2), einer Anode (4.1,4.2) und einem Elektrolyten (6.1, 6.2) gebildet ist, der zwischen der Kathode (2.1, 2.2) und der Anode (4.1, 4.2) angeordnet ist, wobei eine Zwischenverbindungsplatte (8) zwischen zwei Elementarzellen (C1, C2) eingefügt ist, wobei die Zwischenverbindungsplatte (8) in elektrischem Kontakt mit einer Elektrode einer Elementarzelle und einer Elektrode einer nachfolgenden Elementarzelle ist, wobei der elektrochemische Reaktor ferner Mittel (10, 18, 28) umfasst, die dazu ausgelegt sind, die Zirkulation wenigstens eines Pneumatikfluids sicherzustellen, das dazu ausgelegt ist, in Kontakt mit den Kathoden und/oder den Anoden in dem elektrochemischen Reaktor zu gelangen, um ihn vor dem In-Kontaktbringen mit den Kathoden und/oder den Anoden aufzuheizen, wobei die Zirkulationsmittel wenigstens eine Leitung (10, 18, 28) für die Zirkulation von Pneumatikfluid derart umfassen, dass thermischer Austausch zwischen dem Pneumatikfluid und den Kathoden und/oder den Anoden erfolgt, wobei die Leitung, die das Aufheizen des Fluids ermöglicht, sich von einer Seite zu einer anderen Seite der Zwischenverbindungsplatte zwischen den Elementarzellen erstreckt und ein erstes Ende umfasst, das auf einer Seite der Zwischenverbindungsplatte liegt, wobei das erste Ende an eine Versorgung angeschlossen ist, die das Pneumatikfluid liefert, sowie ein zweites Ende, das auf einer anderen Seite der Zwischenverbindungsplatte liegt, wobei das zweite Ende das erhitzte Fluid in Kontakt mit der einen oder der anderen der Elektroden in Kontakt mit der Zwischenverbindungsplatte bringt.

2. Elektrochemischer Reaktor nach Anspruch 1, bei dem die Leitung (10, 18) in der Zwischenverbindungsplatte (8) gebildet ist.

3. Elektrochemischer Reaktor nach Anspruch 1, bei dem die Leitung (28) zwischen der Zwischenverbindungsplatte und der einen und/oder der anderen der Elektroden eingefügt ist.

4. Elektrochemischer Reaktor nach Anspruch 1, bei dem die Zirkulationsmittel eine erste Leitung (10) für die Zirkulation eines Pneumatikfluids umfassen, das dazu ausgelegt ist, in Kontakt mit der einen der zwei Elektroden zu gelangen, sowie eine zweite Leitung (18) für die Zirkulation eines Pneumatikfluids, das dazu ausgelegt ist, in Kontakt mit der anderen Elektrode zu gelangen.

5. Elektrochemischer Reaktor nach Anspruch 4, bei dem die erste (10) und die zweite (18) Leitung in der Zwischenverbindungsplatte realisiert sind.

6. Elektrochemischer Reaktor nach Anspruch 4, bei dem die erste Leitung zwischen der Zwischenverbindungsplatte und der einen der Elektroden eingefügt ist, und die zweite Leitung zwischen der Zwischenverbindungsplatte und der anderen Elektrode eingefügt ist.

7. Elektrochemischer Reaktor nach einem der Ansprüche 1 bis 6, bei dem dann, wenn wenigstens eine der zwei Elektroden eine Kathode ist, das Pneumatikfluid, welches dazu ausgelegt ist, in Kontakt mit der Kathode zu gelangen, Wasserdampf ist.

8. Elektrochemischer Reaktor nach einem der vorhergehenden Ansprüche, der dazu ausgelegt ist, bei hoher Temperatur zu arbeiten, vorzugsweise oberhalb von 900° C.

9. Elektrolyseanlage, umfassend ein Elektrolysegerät nach einem der vorhergehenden Ansprüche sowie einen Wärmetauscher stromaufwärts des elektrochemischen Reaktors, in dem die eintretenden Pneumatikfluide und die austretenden Pneumatikfluide derart separiert zirkulieren, dass die eintretenden Pneumatikfluide ausgehend von den austretenden Pneumatikfluiden erhitzt werden.

10. Verfahren zur Elektrolyse eines Pneumatikfluids unter Verwendung eines elektrochemischen Reaktors nach einem der vorhergehenden Ansprüche, umfassend die Schritte:
a) Zirkulation des Pneumatikfluids zwischen einer Elektrode einer Elementarzelle und einer Elektrode einer benachbarten Elementarzelle ohne Kontakt mit diesen zum Aufheizen des Pneumatikfluids,
b) Injektion des erhitzten Pneumatikfluids bei der einen und/oder der anderen der Elektroden.

11. Verfahren zur Elektrolyse nach Anspruch 10, bei dem im Schritt a) die Zirkulation eines Pneumatikfluids, das dazu ausgelegt ist, in Kontakt mit der einen der Elektroden zu gelangen, und eines Pneumatikfluids, das dazu ausgelegt ist, in Kontakt mit der anderen Elektrode zu gelangen, gemäß getrennten Strömungswegen vorgesehen ist, und im Schritt b) die Injektion dieser Pneumatikfluide bei der einen beziehungsweise der anderen der Elektroden vorgesehen ist.

## Claims

1. Electrochemical reactor comprising a stack of a plurality of elementary electrolysis cells (C1, C2), each cell (C1, C2) being formed of a cathode (2.1, 2.2), an anode (4.1, 4.2) and an electrolyte (6.1, 6.2) provided between the cathode (2.1, 2.2) and the anode (4.1, 4.2), an interconnection plate (8) being interposed between two elementary cells (C1, C2), said interconnection plate (8) being in electric contact with an electrode of an elementary cell and an electrode of a following elementary cell, said electrochemical reactor also comprising means (10, 18, 28) capable of ensuring the circulation of at least one pneumatic fluid to be brought into contact with the cathodes and/or the anodes in the electrochemical reactor for heating it up before contacting the same with the cathodes and/or the anodes, wherein said circulation means comprise at least one conduit (10, 18, 28) for the circulation of the pneumatic fluid, so that heat exchanges between the pneumatic fluid and the cathodes and/or the anodes take place, the conduit enabling the heating of the fluid extending from one side to another side of the interconnection plate between the elementary cells, and comprising a first end situated on one side of the interconnection plate, said first end being connected to a supply delivering said pneumatic fluid and a second end situated on another side of the interconnection plate, said second end bringing the heated fluid into contact with one or the other of the electrodes in contact with the interconnection plate.

2. Electrochemical reactor according to claim 1, wherein the conduit (10, 18) is formed in the interconnection plate (8).

3. Electrochemical reactor according to claim 1, wherein the conduit (28) is interposed between the interconnection plate and one and/or the other of the electrodes.

4. Electrochemical reactor according to claim 1, wherein the circulation means comprise a first conduit (10) for the circulation of a pneumatic fluid to be brought into contact with one of the two electrodes, and a second conduit (18) for the circulation of a pneumatic fluid to be brought into contact with the other electrode.

5. Electrochemical reactor according to claim 4, wherein the first (10) and second (18) conduits are formed in the interconnection plate.

6. Electrochemical reactor according to claim 4, wherein the first conduit is interposed between the interconnection plate and one of the electrodes and the second conduit is interposed between the interconnection plate and the other electrode.

7. Electrochemical reactor according to one of claims 1 to 6, wherein, when at least one of the two electrodes is a cathode, the pneumatic fluid to be brought into contact with the cathode is water vapour.

8. Electrochemical reactor according to one of the preceding claims intended to operate at high temperature, advantageously above 900°C.

9. Electrolysis installation comprising an electrolyser according to one of the preceding claims and a heat exchanger upstream of the electrochemical reactor, in which circulate in a separate manner the incoming pneumatic fluids and the outgoing pneumatic fluids, so as to heat up the incoming pneumatic fluids from the outgoing pneumatic fluids.

10. Method for electrolysing a pneumatic fluid using an electrochemical reactor according to one of the preceding claims, comprising the steps of:
a) circulation of the pneumatic fluid between an electrode of an elementary cell and an electrode of an adjacent elementary cell without contact with them to heat up said pneumatic fluid,
b) injection of the heated pneumatic fluid onto one and/or the other of the electrodes.

11. Electrolysis method according to claim 10, wherein step a) provides for the circulation along separate streams of a pneumatic fluid to be brought into contact with one of the electrodes and a pneumatic fluid to be brought into contact with the other electrode and step b) provides for the injection of these pneumatic fluids onto one and the other of the electrodes respectively.
